# EUROPEAN PATENT APPLICATION

(11) **EP 1 335 224 A2**
(43) Date of publication of application: **13.08.2003**
(21) Application number: 02425762.8
(22) Date of filing: 11.12.2002
(51) Int. Cl.: G02B 6/50

(54) **Method and apparatus for laying optical fibre cables within pipelines with obstacles**

(30) Priority: 11.02.2002 IT RM20020072; 27.03.2002 IT RM20020174
(71) Applicant: FIBOT HOLDING LTD., Pieta'MSD - Malta (MT)
(72) Inventor:
(74) Representative: Iannone, Carlo Luigi

(57) **Abstract**

The invention concerns a method for laying of one or more optical fibre cables within pipelines with obstacles to the introduction, for example containing cables previously laid, comprising the following steps:
- introducing a flexible guide tube for each optical fibre cable to be laid from an end of the pipeline;
- connecting said flexible guide tube with transportation means;
- transporting said flexible guide tube up to the other end of the pipeline;
- inserting the optical fibre cable from an end of said guide tube; and
- transporting the optical fibre cable by a pressure fluid up to the other end of the guide tube, said pressure fluid being particularly a gas or a liquid, preferably air or water.

## Description

The present invention relates to a method and apparatus for laying optical fibre cables within pipelines with obstacles to the introduction, for example pipelines containing cables previously laid.

As it is well known, cable for telephone systems, particularly optical fibre cables, are laid within tubes comprising the infrastructure of the whole telephone network.

Cable network extends both to the urban and interurban area and covers all the national and international territory.

This network greatly enlarged in the last thirty years, during which the optical fibre cables have been used as physical support and is continuously updated to satisfy the growing needing of the new connections.

During the last years, laying of the cables within the infrastructure has been automated by systems using pressure fluids, thus avoiding the long and laborious laying operations of the manual insertion. For reference, see Italian patent N° 1,244,964 and the following improvements of the same, patented by the Italian Utility model N° 227,223, and by the Italian Utility model application N° RM2000U000044 and RM2001U000119.

On the other hand, said systems are very efficient and make it possible, by a single solution, to lay cables longer than those installed by the traditional techniques, so that the only limits to the length of the cables installed by the above mentioned technology, about 4 kilometres, are due to manufacturing constraints of the cable, and not to limits imposed by the laying technology.

During the time, first the large interurban connections have been realised, then the coupling connections between the various urban exchange and then the large rings connecting the various urban zones, the so called "baricentric rings".

At present, to complete the above technology, it is always more felt the needing of realising the so-called last mile and/or the so-called access network, i.e. the network connecting the baricentric rings and the single users.

During this realisation phase, the cost of civil works, for example to obtain authorisation for digging and restoring the sites, is really high and can reach even 80-90% of the whole connection.

Remarkable economical advantages are possible if it is possible to use the already existing pipelines, even if already occupied by previously laid cables.

However, said solution has some drawbacks, making it impracticable.

In fact, according to the standard technique, optical cables are laid within guide tubes in such a way that each cable occupies only one tube. Said operation is optimum if the diameter of the tube is equal to about twice the cable diameter. In case a plurality of optical fibre cables must be laid, it is a good design rule to place the relevant guide tubes within a bigger common pipeline, further providing the presence of some empty guide tubes for possible future insertion of further cables.

Unfortunately, very often these rules are not respected and it is not unusual the situation where a common pipeline is already occupied by cables, that within the same is there space for laying other cables, but that the necessary guide tubes are not present.

In this situation, each direct laying of a new cable is extremely difficult for the presence and the casual placing of the existing cables within the tube, making it difficult the manual laying.

On the other hand, it is not possible to use the technology employing a pressure fluid, since the mechanical features (material, diameter and thickness) of the common pipeline would not be able to support the inner pressure increase necessary to the passage of the tubes, or even directly of the optical cables.

In this situation it is included the solution according to the present invention aiming to provide a method and a device for laying of optical fibre cables within pipelines already containing other cables.

These and other advantaged are obtained by the preliminary laying of a guide tube for optical fibre cables, within pipelines already containing other cables, within which the relevant optical fibre cable is inserted by the known technology using pressure fluids.

It is therefore specific object of the present invention a method for laying of one or more optical fibre cables within pipelines with obstacles to the introduction, for example containing cables previously laid, comprising the following steps:
- introducing a flexible guide tube for each optical fibre cable to be laid from an end of the pipeline;
- connecting said flexible guide tube with transportation means;
- transporting said flexible guide tube up to the other end of the pipeline;
- inserting the optical fibre cable from an end of said guide tube; and
- transporting the optical fibre cable by a pressure fluid up to the other end of the guide tube, said pressure fluid being particularly a gas or a liquid, preferably air or water.

According to the invention, said method can comprise a further step, before the above previous steps, said further step providing the squeezing of said flexible guide tube all along its length, giving it a band, flat shape.

Preferably, according to the invention, it is the same pressure fluid transporting the optical fibre cable from one end to the other end of said flexible guide tube to widen the guide tube, to give to the same the required substantially circular section.

As an alternative, said transportation means are inserted within the pipeline at the same time of said flexible guide tube, or they are already present within the pipeline when inserting said flexible guide tube.

It is a second object of the present invention, a device for laying optical fibre cables within pipelines with obstacles to the introduction, for example containing cables previously laid, comprising means for the introduction and the dragging of the cable within a guide tube by a pressure fluid, said means for the introduction and the dragging of the cable being provided with a cable introduction opening, with one or more dragging fluid introduction holes and of a cable and dragging fluid exit opening, means to recover and house the cable, means to convey the cable from said recovery and housing means to said introduction and dragging means, said device further comprising means for preventive laying at least a guide flexible tube, said means for preventive laying at least a guide flexible tube comprising a head, preferably an ogive shaped head, said head having an inner hollow portion and being provided with nozzles on its rear part, sealing coupled with a thrust tube, said head and said thrust tube realising a motion system, to which one end of said guide tube can be connected by suitable coupling means, said motion system operating by the ejection of a pressure fluid, said pressure fluid being particularly a gas or a liquid, preferably air or water, conveyed to the head through the thrust tube and through said nozzles, by reaction generating a forward thrust on the head, and a contemporaneous dragging of the thrust tube, said motion system further comprising coupling means with said guide tube before the latter is introduced within the pipeline, said guide tube in this way being dragged during the advancement along the motion system, or said guide tube being connectable with said motion system only before the subsequent recovery step of the motion system form the pipeline, said guide tube in this way being dragged within the pipeline during the extraction of the thrust tube.

Preferably, according to the invention, said coupling means between the said guide tube and said motion system, comprised of said thrust tube and said head, comprise an anti-torsion joint.

Still according to the present invention, said device further comprises at least a reel for housing said flexible guide tube, said tube being unwound from the same reel during the laying operation, and a reel for recovering and housing said thrust tube, preferably a powered reel, from which the thrust tube is unwound during the advancement of the head and on which it is then wound again during the recovery phase following the laying of the guide tube.

Preferably, according to the invention, said head is coupled with said thrust tube by sealing means allowing their de-coupling when wished.

Further, always according to the present invention, said nozzles are evenly provided all along the rear surface of said head, and for pressure between 130 and 160 bar they can have a whole passage section between 1/18 and 1/30, preferably 1/24, of the passage section of the thrust tube and are oriented according to a direction substantially parallel to the wished motion direction.

Finally, it is a third object of the invention a thrust and dragging device within a pipeline, by a pressure fluid, said pressure fluid being particularly a gas or a liquid, preferably air or water, said device comprising a head, preferably a ogive shaped head, provided of an inner hollow portion, provided with means for sealing coupling with a tube and a plurality of nozzles on its rear part, said nozzles being symmetrically provided with respect to the centre of the rear portion of said head, and through which the pressure fluid exits, thus creating a reaction force thrusting the device forward.

Preferably, according to the invention, for fluid pressures between 130 and 160 bar, said nozzles have a whole passage section between 1/18 and 1/30, preferably 1/24, of the thrust tube passage section, and are oriented according to a direction substantially parallel to the wished motion direction.

It is well evident the efficiency of the method and of the device according to the present invention, in view of which the pipeline and the already existing cables are not damaged by the introduction of the new guide tube and of the new cable.

The present invention will be now described, for illustrative but not limitative purposes, according to its preferred embodiments, with particular reference to the figures of the enclosed drawings, wherein:
figure 1 shows a section view of the common pipeline containing the various cables;
figure 2 shows the motion system comprised of the head and the thrust tube, beside the guide tube and the relevant means for its connection with the motion system, in case the introduction of the flexible guide tube within the pipeline occurs at the same time of the introduction of the motion system;

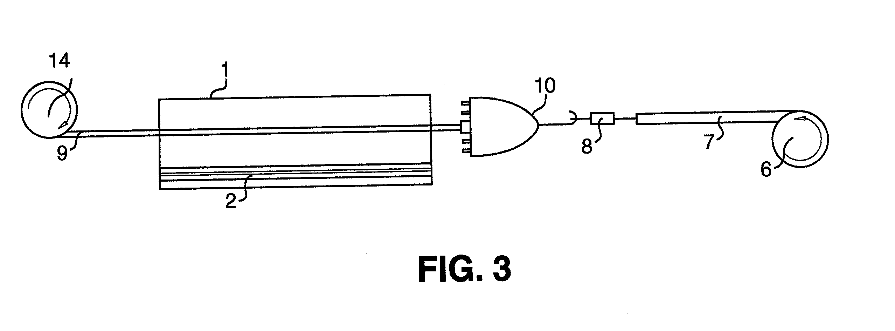

figure 3 shows the motion system comprised of the head and of the thrust tube, beside the guide tube and the relevant means for its connection with the motion system, in case the introduction of the flexible guide tube within the pipeline occurs at the same time of the extraction of the motion system;
figure 4 shows a section longitudinal view of the common pipeline containing the previous cables and the introduced guide tube; and
figure 5 shows a longitudinal section view containing the previous cables and the introduced guide tube, during the introduction of the optical fibre cable.

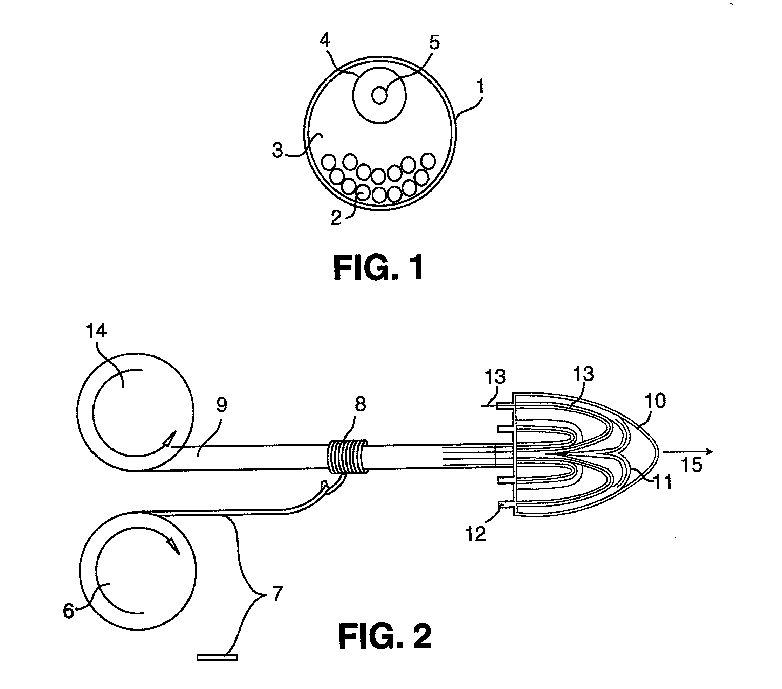

Making first reference to figure 1, it is shown a pipeline 1 within which cables 2 are placed, but it is not yet available space 3 for laying further cables, particularly a new cable 5 within the relevant guide tube 4 of the cable.

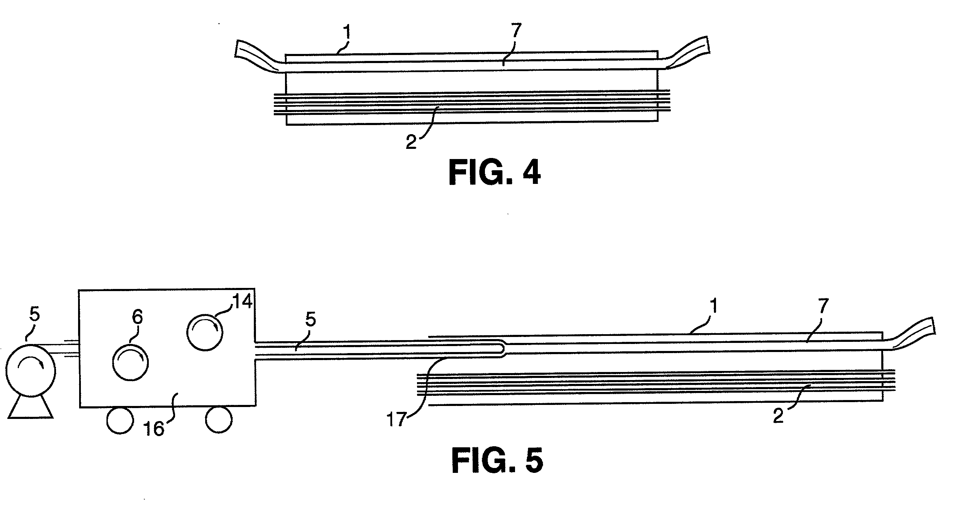

Figure 2 and figure 4 show the portion characterising the laying device according to the present invention, i.e. the motion system. Particularly, it is shown the head 10 of the device, toward which a fluid is conveyed through the thrust tube 9, sealing coupled with the same.

Head 10 has an inner hollow portion 11 and has a ogive shape, to make its forward motion within the pipeline easier. Nozzles 12 are present on the rear surface of the head 10, directing the outlet of the fluid 13, said nozzles 12 being symmetrically provided with respect to the centre axis of said rear surface, through said nozzles 12 said fluid being pressure ejected, this creating a reaction thrusting forward the head 10.

Moving forward, head 10 drags also the thrust tube 9, unwinding from a first reel 14.

Guide tube 7 that must be laid within the pipeline 1 can be connected to the thrust tube 9 by an anti-torsion joint 8, and dragged during the thrust phase due to the fluid, as shown in figure 2; otherwise, it can be connected to the thrust tube 9 or directly to the head 10 always through an anti-torsion joint 8, and be dragged within the pipeline 1 during the extraction of the motion system comprised by the head 10 and the thrust tube 9 and its winding and recovery about the first reel 14.

In case it is necessary, before the extraction, head 10 can be separated from the thrust tube 9 to minimise the resistance opposed to the recovery.

Guide tube 7 can be made up of polyethylene or other flexible material; said guide tube 7 is suitably dimensioned to support the inner overpressure that will be necessary to the dragging of the optical fibre cable, said value varying in function of the length of the pipeline 1 and of the number and kind of obstacles to the introduction. The guide tube 7 is unwound from a second reel 6, having a suitable diameter for the cable to be laid.

Guide tube 7 has a thin wall so as to be squeezed along its diameter 7a.

When the guide tube 7, that is first introduced within the pipeline 1, reaches the other end, it detaches from the motion system, namely from the anti-torsion joint 8, the tube is cut from the second reel 6, and one end of the guide tube 7 is connected to the hydraulic or pneumatic apparatus 16 for laying the cable (said apparatus is shown only schematically in the figures).

Making reference to figure 5, known apparatus 16, by its motion flow, determines a hydraulic or pneumatic flow, which is conveyed into the guide tube 7 and that carries out the opening 17 of the guide tube 7, beside the floating action and the dragging action of the cable 5 within the guide tube 7 up to the final laying of the cable.

The same apparatus 16 carries out all the power take-off necessary to power the various mechanisms, completing the whole operation.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Method for laying of one or more optical fibre cables within pipelines with obstacles to the introduction, for example containing cables previously laid, **characterised in that** it comprises the following steps:
- introducing a flexible guide tube for each optical fibre cable to be laid from an end of the pipeline;
- connecting said flexible guide tube with transportation means;
- transporting said flexible guide tube up to the other end of the pipeline;
- inserting the optical fibre cable from an end of said guide tube; and
- transporting the optical fibre cable by a pressure fluid up to the other end of the guide tube.

2. Method for laying of one or more optical fibre cables according to claim 1, **characterised in that** it comprises a further step, before the above previous steps:
- squeezing said flexible guide tube all along its length, giving it a band, flat shape.

3. Method for laying of one or more optical fibre cables according to claim 2, **characterised in that** it is the same pressure fluid transporting the optical fibre cable from one end to the other end of said flexible guide tube to widen the guide tube, to give to the same the required substantially circular section.

4. Method for laying of one or more optical fibre cables according to one of the claims 1 - 3, **characterised in that** said transportation means are inserted within the pipeline at the same time of said flexible guide tube.

5. Method for laying of one or more optical fibre cables according to one of the claims 1 - 3, **characterised in that** said transportation means are already present within the pipeline when inserting said flexible guide tube.

6. Method for laying of one or more optical fibre cables according to one of the preceding claims **characterised in that** said pressure fluid is a gas.

7. Method for laying of one or more optical fibre cables according to claim 6, **characterised in that** said gas is air.

8. Method for laying of one or more optical fibre cables according to one of the claims 1 - 5, **characterised in that** said pressure fluid is a liquid.

9. Method for laying of one or more optical fibre cables according to claim 8, **characterised in that** said liquid is water.

10. Device for laying optical fibre cables within pipelines (1) with obstacles to the introduction, for example containing cables (2) previously laid, comprising means for the introduction and the dragging of the cable within a guide tube by a pressure fluid, said means for the introduction and the dragging of the cable being provided with a cable introduction opening, with one or more dragging fluid introduction holee and of a cable and dragging fluid exit opening, means to recover and house the cable, means to convey the cable from its recovery and housing means to said introduction and dragging means, said device being **characterised in that** it further comprises means (9, 10, 12) for preventive laying at least a guide flexible tube (7), said means (9, 10, 12) for preventive laying at least a guide flexible tube (7) comprising a ogive shaped head (10), said head (10) providing inside a hollow portion (11) and provided with nozzles (12) on its rear part, sealing coupled with a thrust tube (9), said head (10) and said thrust tube (9) realising a motion system, to which one end of said guide tube (7) can be connected by suitable coupling means, said motion system (9, 10) operating by the ejection of a pressure fluid conveyed to the head (10) through the thrust tube (9), and through said nozzles (12), by reaction generating a forward thrust on the head (10), and a contemporaneous dragging of the thrust tube (9), said motion system (9, 10) further comprising coupling means (8) with said guide tube (7) before the latter is introduced within the pipeline, said guide tube (7) in this way being dragged during the advancement of the motion system (9, 10).

11. Device for laying optical fibre cables according to claim 10, **characterised in that** said motion system (9, 10) comprises means (8) for coupling with said guide tube (7) only before the recovery phase of said motion system (9, 10) from the pipeline, the guide tube (7) in this way being dragged within the pipeline during the extraction of the tube (9).

12. Device for laying optical fibre cables according to one of the preceding claims 10-11, **characterised in that** said pressure fluid is a gas.

13. Device for laying optical fibre cables according to according to claim 6, **characterised in that** said gas is air.

14. Device for laying optical fibre cables according to one of the preceding claims 10-11, **characterised in that** said pressure fluid is a liquid.

15. Device for laying optical fibre cables according to according to claim 14, **characterised in that** said liquid is water.

16. Device for laying optical fibre cables according to one of the preceding claims 10-15, **characterised in that** said head has an ogive shape.

17. Device for laying optical fibre cables according to one of the claims 10 - 16, **characterised in that** said coupling means between said guide tube (7) and said motion system, comprised of said thrust tube (9) and said head (10), comprise an anti-torsion joint (8).

18. Device for laying optical fibre cables according to one of the preceding claims 10 - 17, **characterised in that** said device further comprises at least a reel (6) for housing said flexible guide tube (7), said tube being unwound from the same reel during the laying operation.

19. Device for laying optical fibre cables according to one of the claims 10 - 18, **characterised in that** further comprises a reel (14) for recovering and housing said thrust tube (9) from which the tube is unwound during the recovery of the motion system following to the laying of the guide tube (7).

20. Device for laying optical fibre cables according to claim 19, **characterised in that** said recovery and housing reel (14) is a powered reel.

21. Device for laying optical fibre cables according to one of the claims 10 - 20, **characterised in that** said head (10) is coupled with said thrust tube (9) by sealing means allowing their de-coupling when wished.

22. Device for laying optical fibre cables according to one of the claims 10 - 21, **characterised in that** said nozzles (12) are evenly provided all along the rear surface of said head (10).

23. Device for laying optical fibre cables according to one of the claims 10 - 22, **characterised in that**, for pressure between 130 and 160 bar said nozzles (12) have a whole passage section between 1/18 and 1/30 of the passage section of the thrust tube.

24. Device for laying optical fibre cables according to claim 23, **characterised in that** said nozzles (12) have a whole passage section of 1/24 of the passage section of the thrust tube.

25. Device for laying optical fibre cables according to one of the claims 10 - 24, **characterised in that** said nozzles (12) are oriented according to a direction substantially parallel to the wished motion direction.

26. Thrust and dragging device within a pipeline, by a pressure fluid (1), according to one of the preceding claims, **characterised in that** it comprises shaped head (10), provided with an inner hollow part (11), means for sealing coupling with a thrust tube (9) and a plurality of nozzles (12) on its rear part, said nozzles (12) being symmetrically provided with respect to the centre rear part of said head (10), through which the pressure fluid exits, thus creating a reaction force thrusting the device forward.

27. Thrust and dragging device within a pipeline according to claim 26, **characterised in that** said head (10) has a ogive shape.

28. Thrust and dragging device within a pipeline according to one of the preceding claims 26 and 27, **characterised in that** for fluid pressures between 130 and 160 bar, said nozzles have a whole passage section between 1/18 and 1/30 of the thrust tube (9) passage section.

29. Thrust and dragging device within a pipeline according to one of the claims 26 - 28, **characterised in that** said nozzles (12) have a whole passage section, of 1/24 of the thrust tube (9) passage section.

30. Thrust and dragging device within a pipeline according to one of the claims 26 - 29, **characterised in that** said nozzles (12) are oriented according to a direction substantially parallel to the wished motion direction.
